# EUROPEAN PATENT APPLICATION

(11) **EP 2 088 657 A1**
(43) Date of publication of application: **12.08.2009**
(21) Application number: 08101410.2
(22) Date of filing: 08.02.2008
(51) Int. Cl.: H02G 15/115, H02G 15/188, H01R 13/46

(54) **A method of producing a cable casing, a cable casing and a cable joint arrangement provided therewith**

(71) Applicant: ABB Technology AG, 8050 Zürich (CH)
(72) Inventor: Tranefors, Kai, 504 93 Borås (SE); Persson, Sture, 441 51 Alingsås (SE); Persson, Martin, 441 39 Alingsås (SE); Bexander, Björn, 414 78 Göteborg (SE); Källberg, Lars, 441 51 Alingsås (SE); Buhr, Mattias, 413 18 Göteborg (SE)
(74) Representative: Dahlstrand, Björn

(57) **Abstract**

A method of producing a cable casing, said casing comprising: a tubular envelope (1) of metal adapted to enclose a part of a cable; a polymeric outer insulation cover (15, 16) that encloses at least a part of said envelope (1). The polymeric cover (15, 16) is attached onto an outer surface by means of casting a polymeric material directly onto said outer surface.

## Description

### TECHNICAL FIELD

The present invention relates to a method of producing a cable casing, said casing comprising: a tubular envelope of metal adapted to enclose a part of a cable, and a polymeric outer insulation cover that encloses at least a part of said envelope.

The invention also relates to a cable casing comprising: a tubular envelope of metal adapted to enclose a part of a cable, and a polymeric outer insulation cover that encloses at least a part of said envelope.

The invention also relates to a cable joint arrangement, comprising: a cable casing comprising a tubular metallic envelope; a first cable extending into said envelope through a first end thereof; a second cable extending into said envelope through a second end thereof and connected to the first cable inside said casing; wherein the metallic envelope is connected to a metallic screen of said first and second cable respectively in said first and second end respectively, and said polymeric cover is arranged so as to electrically insulate the metallic envelope from the surrounding environment, said cable joint arrangement being provided with a cable casing according to the invention. However, it should be noted that this is only a preferred application and that the cable casing according to the invention may be used also in other applications, such as a cable termination casing in cable termination device.

In particular, the invention relates to cable casings for the enclosure of medium or high voltage cables, wherein medium and high voltage is referred to as voltages of approximately 1 kV and above.

The cables may be single or plural phase cables.

### BACKGROUND OF THE INVENTION

A cable joint arrangement shall restore all the layers of a cable. The conductors of two cables to be joined are, normally, connected by means of an aluminium or copper connector. The electric insulation of the cables, normally made of crosslinked polyethylene, PEX, may be replaced by electrically insulating rubber in the joint body, and the outer semi-conducting layer may be rebuilt with a semi-conducting rubber on the outside of the joint body.

For outer protection against mechanical force and water penetration two layers of material may be used on the cable. The outermost layer protects the cable from mechanical impact and is often made of PVC or similar materials. On the inside of the outer sheath there may be provided a metallic barrier that keeps the water out. No other kind of material suitable for this purpose protects against water diffusion as good as metal does. This metallic barrier may be made of copper, lead or aluminium foil.

Traditionally, the metallic barrier in a cable joint has been made of copper. The reasons are that thin foiled copper is easy to solder and that copper is a very good conductor. The conducting properties are used for carrying the current from one cable sheath to another. The drawbacks of copper are its high price and its high density. There has been suggested to use aluminium instead of copper as the material of the metallic barrier, but then a rather large wall thickness will be required in order to ensure a sufficiently high electric conductivity thereof. Therefore, in practice, there are no aluminium barriers in use, as far as the present applicant knows.

In order to protect the metallic barrier from mechanical stresses such as those due to wear from earth when buried therein, the metallic barrier is enclosed in an outer cover. Said cover should also act as an electric insulator that separates the barrier electrically from the earth potential. Traditionally, this cover has been made of glass fibre-reinforced epoxy, and there has also been provided a space between the outer periphery of the barrier and the cover, which space has been filled with a filling compound, preferably an electrically insulating material such as a polymeric material.

US 6,172,304 describes cable joint arrangement in which the tubular barrier is formed by copper and arranged so as to conduct a current from the screen of a first cable to the screen of another cable. An outer covering preformed by means of a rotational moulding technique and subsequently slid hot onto the tubular barrier is also suggested.

### THE OBJECT OF THE INVENTION

It is an object of the present invention to provide a method of producing a cable casing that facilitates the application of an outer cover onto the tubular envelope thereof.

### SUMMARY OF THE INVENTION

The object of the invention is achieved by means of the initially defined method, characterised in that said polymeric cover is attached onto an outer surface by means of casting a polymeric material directly onto said outer surface.

According to one embodiment, said polymeric cover is attached to the outer peripheral surface of said envelope continuously along the length thereof. Thereby, there are no pockets of air or gas left between the metal of said envelope and the polymeric cover, and the latter need not be self-carrying but uses the metal envelope as a support over its entire extension.

According to one embodiment said polymeric cover is attached to said outer surface of said envelope continuously along the length thereof between two end regions in which the metal of said envelope remains exposed. In said end regions, the exposed metal may be used as a surface onto which a soldering material such as Sn is later applied for the purpose of sealing the openings of said envelope against the outer periphery of a cable introduced into the latter.

Preferably, said envelope is formed by joining two individual parts, preferably a first tubular part to a second tubular part, wherein said polymeric cover is attached onto an outer surface of each of said parts by means of casting a polymeric material directly onto the outer surface thereof.

It is also preferred that said envelope is formed by joining two individual parts, preferably a first tubular part to a second tubular part, wherein at least one of said first and second parts has been provided with a polymeric cover by means of casting directly onto an outer surface thereof, and that the parts are joined such that said polymeric cover electrically insulates the first part from the second part. This solution is particularly preferred for the case in which the screens of two cables connected to each other inside the envelope are to be electrically separated and, accordingly, the separate parts of the tubular envelope need to be electrically insulated from each other.

Preferably, in a region in which said first tubular part and said second part are to be joined, at least one of said parts is provided with said polymeric cover on an inner peripheral surface thereof. Thereby, discharges between the adjacent surfaces of the adjacent parts of the metallic envelope may be prevented. The extension of the cover on the inner periphery may be adapted to specific applications, and both parts of the envelope may, preferably, be provided with such cover if deemed necessary.

According to one embodiment, said first and second parts are tubular parts and the polymeric cover is attached on the inner peripheral surface such that it extends axially from said region to the region of an end wall of said at least one part. The end region may comprise a lateral wall, or an end part where the metal of the envelope should be exposed for the purpose of contacting the latter with an exposed metallic screen of a cable later introduced into the envelope.

According to a preferred embodiment, said polymeric cover comprises an elastomer, preferably a polyurethane.

The object of the invention is also achieved by means of the initially defined cable casing, characterised in that said polymeric cover is a cast polymer, cast directly onto an outer peripheral surface of said metallic envelope.

According to one embodiment said tubular envelope encloses a space adapted for housing a contact element to be connected to a metallic screen of a cable introduced in said casing. when such contact elements are used, preferably in the case of so called screen separation by which the metallic screens of two mating cables inside a cable casing are electrically separated, prior art teaches the use of a tubular metallic envelope that is attached or adjacent said screen and the wherein said element is not housed by the envelope but only by a polymeric cover, which encloses the tubular metallic element with a spacing, at least in the region of said contact element. The present invention, on the other hand, suggests that the envelope should provide a spacing between itself and a cable introduced therein, and that said contact element be located in said spacing. Thereby, a direct casting of the polymeric cover onto the metallic envelope is permitted, since there need not be any spacing therebetween for the housing of any such contact element. Moreover, since the contact element may then, preferably, be connected directly to the metallic screen of the cable, and not electrically through the envelope, the envelope does not become a current-conducting component but only a voltage-carrying component (carrying the voltage of the cable screen with which it is in contact.) Thereby a material of lower electrical conductivity than for example copper may be used as the main constituent of the metallic envelope. According to a preferred embodiment of the invention said envelope comprises aluminium as a main constituent. Thereby, an envelope which is both cheaper to produce and of lower density than copper, which is the material normally used for his purpose, is presented.

Preferably, in order to support a direct casting of the polymeric cover on the metallic envelope, the polymeric cover is attached to an outer surface of said envelope continuously along the length thereof. This also delimits the need of any further post-mounted cover on the envelope once the polymeric cover has been cast onto the envelope. However, for the reason previously mentioned, it is preferred that said polymeric cover is attached to said outer surface of said envelope continuously along the length thereof between two end regions in which the metal of said envelope remains exposed.

According to one embodiment, said envelope comprises two parts, preferably a first tubular part and a second tubular part, joined together, wherein said polymeric cover is attached onto an outer peripheral surface of each of said parts. Thereby, any time-consuming and difficult post-mounting of such cover on the mounted parts is avoided.

Preferably, said envelope comprises two parts, preferably a first tubular part and a second tubular part, joined together, wherein at least one of said first and second parts is provided with a polymeric cover cast onto an outer surface thereof, and wherein said polymeric cover electrically insulates the first part from the second part. Thereby, screen separation, as mentioned previously, is facilitated. The joint between the two parts may be a joint in which the parts overlap each other, wherein at least one of the overlapping surfaces is provided with said cover.

According to one embodiment it is preferred that, in a region in which said first tubular part and said second part are joined, at least one of said parts is provided with said polymeric cover on an inner peripheral surface thereof. Thereby, unwanted electrical discharges between electrically separated screens may be prevented.

As previously mentioned for the inventive method, it is preferred that the polymeric cover comprise an elastomer, preferably a polyurethane.

According to a preferred embodiment, the cable casing of the invention is a cable joint casing.

The invention also relates to a cable joint arrangement, comprising: a cable casing comprising a tubular metallic envelope; a first cable extending into said envelope through a first end thereof; a second cable extending into said envelope through a second end thereof and connected to the first cable inside said casing; wherein the metallic envelope is connected to a metallic screen of said first and second cable respectively in said first and second end respectively, and said polymeric cover is arranged so as to electrically insulate the envelope from the surrounding environment, characterised in that the casing is a casing according to the invention.

Between its inner periphery and one of said cables, said envelope preferably encloses a space, wherein there are provided screen separation means in said space, said screen separation means being connected to a respective of said metallic screens of the first and second cables.

Further features and advantages of the present invention will be disclosed in the following detailed description and in the annexed claims.

### BRIEF DESCRIPTION OF THE DRAWINGS

A preferred embodiment of the invention will now, by way of example, be described with reference to the annexed drawing, on which
Fig. 1 is a perspective view of two separate parts of a cable casing according to the invention,
Fig. 2 is a view corresponding to the one in fig. 1, but partly cut, and
Fig. 3 is a cross section of a cable casing arrangement of the invention.

### DETAILED DESCRIPTION OF THE INVENTION

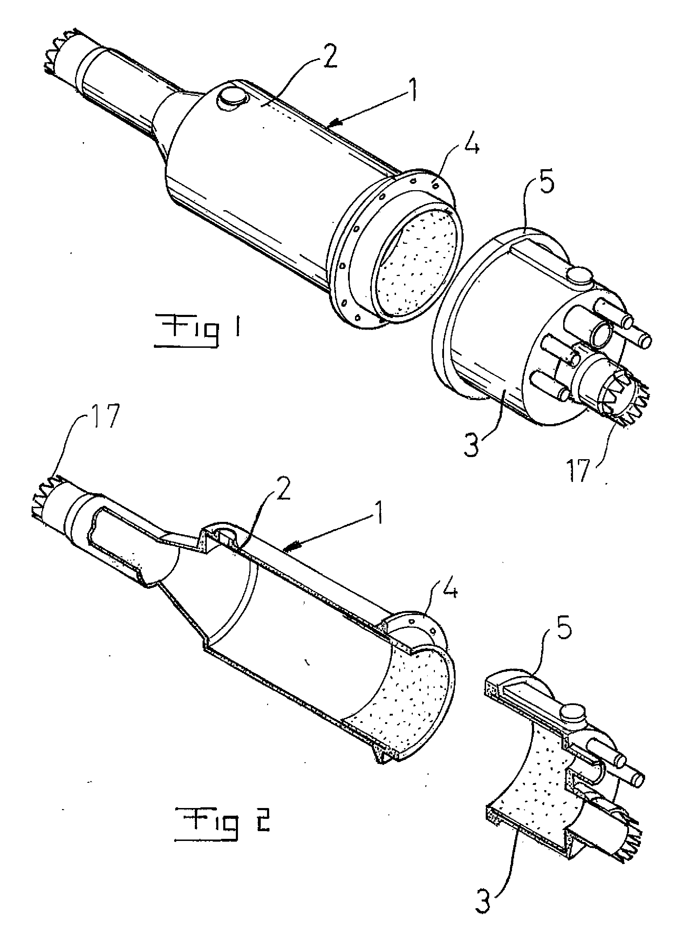

Fig. 1 shows a tubular metallic envelope 1 that comprises two separate tubular parts 2, 3. Connection elements formed by flanges 4, 5 are provided on the first and second parts 2, 3 respectively for the purpose of joining said parts. Fig. 2 show said parts 2, 3 partly cut in order to visualize the design of the interior thereof.

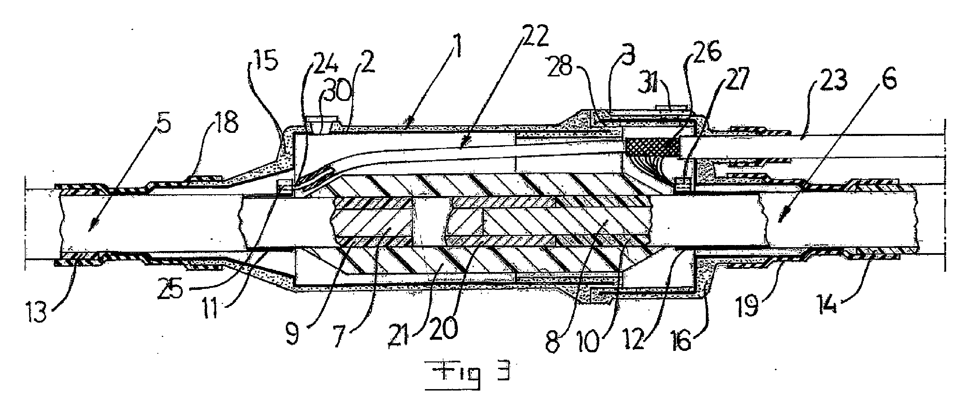

Fig. 3 is a cross section showing a cable joint casing in which the tubular metallic envelope 1 shown in figs. 1 and 2 plays a vital role as a means for controlling an electric field around two cables 5, 6 introduced therein and for preventing water from reaching the electric insulation of the cables inside said casing. Each cable 5, 6 comprise an electric conductor 7, 8 enclosed by an electric insulation 9, 10. Said electric insulation 9, 10 is, in its turn, enclosed by a metallic screen or sheath 11, 12. Up to a point adjacent to the inlet into the envelope 1 each cable also comprises a further outer covering layer 13, 14 , for example a polymer.

Each tubular part 2, 3 of the envelope 1 is covered by an electrically insulating cover 15, 16 on its outer periphery. This cover 15, 16 preferably comprises a polymer, preferably an elastomer, preferably comprising polyurethane and has as its purpose to protect the metallic envelope from intrusion of water and physical affection and to insulate it electrically in relation to the surrounding environment. The cover 15, 16 is firmly attached to the surface of the envelope 1 all along its extension. Preferably it has been attached through a casting operation during which it has been directly cast onto the outer surface of each of the parts 2, 3 of the envelope 1.

The cover 15, 16 extends to an end region of each of the parts 2, 3 of the envelope 1 in which the latter is provided with elements such as the tongues 17 shown in figs. 1 and 2, provided so as to be folded and connected to the screen 11, 12 of each respective cable 5, 6. The metal of the envelope 1 is exposed at said end regions for the purpose of permitting a sealing of the openings through which the cables 5, 6 enter the casing. This sealing is preferably achieved through a soldering operation in which a soldering metals such as Sn is deposited on and between the tongues 17 folded against the screens 11, 12. In order to protect theses end regions with exposed metal from physical affection and to electrically insulate them from the surrounding environment, a sleeve 18, 19 of an electrically insulating material such as a polymer, for example EPDM, is applied around each of said end regions subsequent to the sealing of said openings. Each sleeve 18, 19 overlaps the adjacent cover 15, 16 on the adjacent part 2, 3 of the envelope 1, as well as the outer layer 13, 14 of the adjacent cable 5, 6.

Inside the casing the conductors 7, 8 of the mating cables 6, 7 are connected by means of a connection device 20 arranged as an element clamping together the exposed adjacent end regions of the conductors 7, 8. Around said connection device, there is provided an electrically insulating body 21, preferably a rubber body, in a way known per se.

The screens 11, 12 of the two cables 5, 6 are not electrically connected to each other, but instead there is provided a screen separation means 22 by means of which each screen is electrically connected to a respective screen of other cable joints through a so called cross-connection device, as known per se. The screen separation means 22 comprises a coaxial cable 23 introduced into the casing through an opening in an end wall of the second part 3 of the tubular envelope 1. The coaxial cable 23 comprises a first conductor 24 connected to a first 11 of said screens 11, 12 by means of a contact element 25 and a second conductor 26 connected to a second 12 of said screens 11, 12 by means of a contact element 27. The coaxial cable 22 and the contact elements 25, 27 are enclosed by the tubular envelope 1. Thus there is a spacing between the inner periphery of the envelope 1 and the outer periphery of the cables 2, 3 enclosed thereby that houses said screen separation means 22.

Since the screens 11, 12 are electrically separated, the two parts 2, 3 of the envelope 1 need also be electrically insulated from each other. This is achieved since the cover 15 on the first part covers an area in which the two parts overlap each other. Also the flange joint 4, 5 is provided such as to electrically insulate the two metallic parts 2, 3 from each other. Moreover, in order to prevent electric discharges between the two parts 2, 3 of the envelope on the inner periphery thereof, the second part 3 of said parts 2, 3 is provided with an electrically insulating cover 28 on its inner periphery.

This insulating cover 28 covers the whole inner periphery of the second part 3 from the region in which it overlaps and is connected to the first part 2 to an opposite end region thereof. The insulating cover 28 is firmly attached to the surface of the second part 3. Preferably, it has been applied thereto by means of a casting operation in which it has been directly cast onto said part. Preferably, the insulating cover 28 on the inner periphery of said part 3 has been cast in the same casting operation as the one in which the outer protective cover 16 has been applied onto said part 3. Preferably the material of the insulating covers 16, 28 on the second part 3 is the same. It should be understood that the first part 2, though not equipped with such inner peripheral cover in the embodiment shown in fig. 3, might as well be provided with such an inner cover in order to further protect the casing from electrical discharges between the separate parts 2, 3 of the envelope 1.

The contact elements 25, 27 by means of which the conductors 24, 26 of the coaxial cable 23 are connected the respective screens 11, 12 are directly connected to a respective one of said screens, i.e. not via the tubular envelope 1. Thereby, the tubular metallic envelope 1 is only carrying the voltage of each of said screens 11, 12, but will not be conducting any electric current. Thereby, a material of lower electrical conductivity than copper, which is the material used for envelopes of prior art, may be used for the envelope 1 without thereby necessitating a larger thickness of said envelope. Accordingly, the envelope 1 of the shown, preferred embodiment comprises aluminium as its main constituent.

Around the rubber body 21 there is provided a further electrically insulating filler material (not shown) which also has the purpose of acting as a thermal conductor. Preferably said filler material comprises sand as a main constituent. In order to enable filling of the filler material subsequent to the mounting of the other parts of the casing, there are provide openings with removable caps 30, 31 in the casing wall defined by the envelope 1 and its insulating cover 15, 16, 28.

## Claims

**1.** A method of producing a cable casing, said casing comprising
- a tubular envelope (1) of metal adapted to enclose a part of a cable,
- a polymeric outer insulation cover (15, 16) that encloses at least a part of said envelope (1), **characterised in that** said polymeric cover (15, 16) is attached onto an outer surface of said envelope by means of casting a polymeric material directly onto said outer surface.

**2.** A method according to claim 1, **characterised in that** said polymeric cover (15, 16) is attached to the outer peripheral surface of said envelope (1) continuously along the length thereof.

**3.** A method according to claim 1 or 2, **characterised in that** said polymeric cover (15, 16) is attached to said outer surface of said envelope (1) continuously along the length thereof between two end regions in which the metal of said envelope (1) remains exposed.

**4.** A method according to any one of claims 1-3, **characterised in that** said envelope
(1) is formed by joining a first part (2) to a second part (3), wherein said polymeric cover (15, 16) is attached onto an outer surface of each of said parts (2, 3) by means of casting a polymeric material directly onto the outer surface thereof.

**5.** A method according to any one of claims 1-4, **characterised in that** said envelope
(1) is formed by joining a first part (2) to a second part (3), wherein at least one (3) of said first and second parts (2, 3) has been provided with a polymeric cover (15, 16) by means of casting directly onto an outer surface thereof, and that the parts are joined such that said polymeric cover (15, 16) electrically insulates the first part (2) from the second part (3).

**6.** A method according to claim 5, **characterised in that,** in a region in which said first part (2) and said second part (3) are to be joined, at least one (3) of said parts (2, 3) is provided with said polymeric cover (28) on an inner peripheral surface thereof.

**7.** A method according to claim 6, **characterised in that** said first and second parts (2, 3) are tubular parts and that the polymeric cover (28) is attached on the inner peripheral surface such that it extends axially from said region to the region of an end wall of said at least one part (3).

**8.** A method according to any one of claims 1-7, **characterised in that** said polymeric cover (15, 16, 28) comprises an elastomer.

**9.** A method according to any one of claims 1-8, **characterised in that** said polymeric cover (15, 16, 28) comprises a polyurethane.

**10.** A cable casing comprising
- a tubular envelope (1) of metal adapted to enclose a part of a cable,
- a polymeric outer insulation cover (15, 16) that encloses at least a part of said envelope (1),
**characterised in that**
said polymeric cover (15, 16) is a cast polymer, cast directly onto an outer peripheral surface of said metallic envelope (1).

**11.** A cable casing according to claim 10, **characterised in that** said tubular envelope
(1) encloses a space adapted for housing a contact element (25, 27) to be connected to a metallic screen (11, 12) of a cable (5, 6) introduced in said casing.

**12.** A cable casing according to claim 10 or 11, **characterised in that** the polymeric cover (15, 16) is attached to an outer surface of said envelope (1) continuously along the length thereof.

**13.** A cable casing according to any one of claims 10-12, **characterised in that** said polymeric cover (15, 16) is attached to said outer surface of said envelope (1) continuously along the length thereof between two end regions in which the metal of said envelope (1) remains exposed.

**14.** A cable casing according to any one of claims 10-13, **characterised in that** said envelope (1) comprises a first part (2) and a second part (3) joined together, wherein said polymeric cover (15, 16) is attached onto an outer peripheral surface of each of said parts (2, 3).

**15.** A cable casing according to any one of claims 10-14, **characterised in that** said envelope (1) comprises a first tubular part (2) and a second tubular part (3) joined together, wherein at least one of said first and second tubular parts (2, 3) is provided with a polymeric cover (15, 16) cast onto an outer surface thereof, and that said polymeric cover (15, 16) electrically insulates the first tubular part from the second tubular part.

**16.** A cable casing according to claim 15, **characterised in that**, in a region in which said first tubular part (2) and said second tubular part (3) are joined, at least one of said parts (2, 3) is provided with said polymeric cover (28) on an inner peripheral surface thereof.

**17.** A cable casing according to claim 16, **characterised in that** the polymeric cover (28) is attached on the inner peripheral surface such that extends axially from said region to the region of an end wall of said tubular part (3).

**18.** A cable casing according to any one of claims 10-17, **characterised in that** said polymeric cover (15, 16, 28) comprises an elastomer.

**19.** A cable casing according to any one of claims 10-18, **characterised in that** said polymeric cover (15, 16, 28) comprises a polyurethane.

**20.** A cable casing according to any one of claims 10-19, **characterised in that** said tubular envelope (1) comprises aluminium as a main constituent.

**21.** A cable casing according to any one of claims 10-20, **characterised in that** it is a cable joint casing.

**22.** A cable joint arrangement, comprising
- a cable casing comprising a tubular metallic envelope (1),
- a first cable (5) extending into said envelope (1) through a first end thereof,
- a second cable (6) extending into said envelope (1) through a second end thereof and connected to the first cable (5) inside said casing,
- wherein the metallic envelope (1) is connected to a metallic screen (11, 12) of said first and second cable (5, 6) respectively in said first and second end respectively, and a polymeric cover (15, 16) arranged so as to electrically insulate the envelope (1) from the surrounding environment, **characterised in that** the casing is a casing according to any one of claims 10-21.

**23.** A cable joint arrangement according to claim 22, **characterised in that,** between its inner periphery and one of said cables (5, 6), said envelope (1) encloses a space and that there are provided screen separation means (22) in said space, said screen separation means (22) being connected to a respective of said metallic screens (11, 12) of the first and second cables (5, 6).

**24.** A cable joint arrangement according to claim 23, **characterised in that** said screen separation means (22) comprises a coaxial cable (23) having a first conductor (24) and a second conductor (26) coaxial therewith, said first conductor (24) being connected to the metallic screen (11) of said first cable (5) and said second conductor (26) being connected to the metallic screen (12) of said second cable (6).

**26.** A cable joint arrangement according to any one of claims 22-25, **characterised in that** inside said casing there is a space between at least one of said first and second cable (5, 6) and the inner periphery of said tubular metallic envelope (1), said space being filled with an electrically insulating medium.

**27.** A cable joint arrangement according to claim 26, **characterised in that** said electrically insulating medium comprises sand.
